(19) Europäisches Patentamt
European Patent Office
Office européen des brevets

(11) EP 0 909 762 B1

(12) EUROPÄISCHE PATENTSCHRIFT

(45) Veröffentlichungstag und Bekanntmachung des Hinweises auf die Patenterteilung:
**09.04.2003 Patentblatt 2003/15**

(51) Int Cl.[7]: **C07F 15/00**, C07B 53/00, C07D 207/00

(21) Anmeldenummer: **98119241.2**

(22) Anmeldetag: **12.10.1998**

(54) **Zweikernige Iridium(I)-phosphinkomplexe und ihre Verwendung als Katalysator in der asymmetrischen Hydroaminierung von Olefinen**

Binuclear Iridium(I) phosphine complexes and their use as catalysts for the asymmetric hydroamination of olefins

Complexes binucléaires d' iridium portant des ligands phosphines, et leur utilisation dans l'hydroamination d'oléfines

(84) Benannte Vertragsstaaten:
**AT BE CH DE DK ES FI FR GB IE IT LI NL PT SE**

(30) Priorität: **14.10.1997 CH 239297**

(43) Veröffentlichungstag der Anmeldung:
**21.04.1999 Patentblatt 1999/16**

(73) Patentinhaber: **LONZA A.G.**
**CH-4002 Basel (CH)**

(72) Erfinder:
- **Bieler, Nikolaus**
  **3902 Brig-Glis (CH)**
- **Egli, Patrick**
  **6055 Alpnach (CH)**
- **Dorta, Romano, Dr.**
  **76100 Rehovot (IL)**
- **Togni, Antonio, Prof. Dr.**
  **8966 Oberwil (CH)**
- **Eyer, Martin, Dr.**
  **3902 Glis (CH)**

(74) Vertreter: **Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) Entgegenhaltungen:
**EP-A- 0 301 457**
**EP-A- 0 612 758**
**EP-A- 0 754 696**

- **DORTA, ROMANO ET AL: "The [IrCl(Diphosphine)]2/Fluoride System. Developing Catalytic Asymmetric Olefin Hydroamination" J. AM. CHEM. SOC. (1997), 119(44), 10857-10858 , XP002110586**

EP 0 909 762 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft neutrale zweikernige Iridium(I)-phosphinkomplexe der allgemeinen Formel

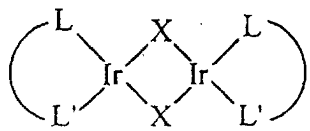

I.

Hierin ist X Fluor, Chlor, Brom oder Iod, und

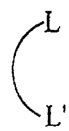

bedeutet jeweils einen chiralen zweizähnigen Diphosphinliganden.

Die Komplexe besitzen quadratisch-planare Konfiguration an den Iridiumzentren und können daher in zwei stereoisomeren Formen (*cis*- und *trans*-Form) auftreten, wenn die Diphosphinliganden keine $C_2$-Symmetriebeziehung zwischen den beiden Phosphoratomen besitzen. In diesen Fällen sind hier und im folgenden immer beide Stereoisomeren gemeint, und zwar sowohl in reiner Form als auch im Gemisch.

Die Erfindung betrifft weiterhin ein Verfahren zur Herstellung dieser Komplexe.

Ausserdem betrifft die Erfindung Verfahren zur asymmetrischen Hydroaminierung von Olefinen unter Katalyse durch Iridium(I)-phosphinkomplexe der Formel I

Die asymmetrische Hydroaminierung von Olefinen ist eine potentiell wichtige Methode zur Herstellung optisch aktiver Amine. Bisher sind jedoch nur wenige praktische Beispiele dieser Reaktion bekannt, insbesondere fehlt es an befriedigenden Verfahren zur intermolekularen Hydroaminierung Die bisher bekannten Beispiele zeichnen sich insbesondere durch geringe Aktivität der verwendeten Katalysatoren und entsprechend niedrige Reaktionsgeschwindigkeiten aus Zudem werden oft nur wenige katalytische Cyclen durchlaufen, was die Verfahren für eine technische Anwendung unbrauchbar macht.

Aufgabe der vorliegenden Erfindung war daher, Katalysatoren zur Verfügung zu stellen, die in der asymmetrischen Hydroaminierung eine höhere Aktivität über eine grosse Zahl katalytischer Cyclen aufweisen und hohe optische Ausbeuten liefern.

Erfindungsgemäss wird diese Aufgabe durch die zweikernigen Iridium(I)-phosphinkomplexe nach Patentanspruch 1 gelöst.

Es wurde gefunden, dass Komplexe der allgemeinen Formel

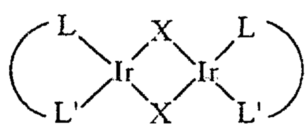

I,

worin X Fluor, Chlor, Brom oder Iod ist
und

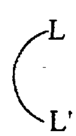

jeweils einen chiralen zweizähnigen Diphosphinliganden bedeutet,
durch ein geeignetes Verfahren leicht hergestellt werden können.

Chirale zweizähnige Diphosphinliganden sind solche Moleküle, die wenigstens ein Chiralitätselement (Chiralitätszentrum, Chiralitätsebene oder Chiralitätsachse) und zwei koordinationsfähige tertiäre Phosphoratome der Oxidationszahl -3 besitzen, wobei die räumliche Anordnung der Phosphoratome die Bildung eines Chelatringes erlaubt. Zahlreiche solcher Liganden mit unterschiedlichen Grundstrukturen sind aus der Literatur bekannt,
insbesondere solche, die ein Biarylsystem wie beispielsweise Biphenyl oder 1,1'-Binaphthalin oder ein Metallocensystem als Grundstruktur aufweisen. Einige der erfindungsgemäss einsetzbaren Liganden sind kommerziell erhältlich, andere können nach bekannten Verfahren oder in Analogie zu solchen hergestellt werden (siehe z. B. A. Togni et al., *Inorg. Chim. Acta* **1994,** *222,* 213-224; Y Hayashi et al., *J. Organomet. Chem.* **1995,** *503*, 143-148; EP-A-0 564 406; EP-A-0 612 758).

Vorzugsweise werden die erfindungsgemässen Komplexe in fester Form isoliert. Die chiralen zweizähnigen Diphosphinliganden sind vorzugsweise 1,2-disubstituierte Ferrocene mit den Phosphinogruppen als und/oder an den beiden Substituenten. Diese Ferrocene besitzen vorzugsweise die allgemeine Formel

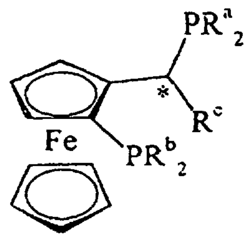

Darin sind die Reste $R^a$ und $R^b$ gleich oder verschieden und jeweils $C_{1-6}$-Alkyl, gegebenenfalls substituiertes Phenyl oder $C_{3-8}$-Cycloalkyl oder die beiden Reste $R^a$ und/oder $R^b$ bilden zusammen mit dem benachbarten Phosphoratom ein monocyclisches oder bicyclisches System mit 3 bis 9 Ringgliedern. Besonders bevorzugte Bedeutungen von $R^a$ und $R^b$ sind *tert*-Butyl, Phenyl, 3,5-Dimethylphenyl, 4-*tert*-Butylphenyl und Cyclohexyl. Ebenfalls besonders bevorzugt sind Verbindungen, in denen die beiden Reste $R^a$ und/oder $R^b$ zusammen mit dem benachbarten Phosphoratom ein 9-Phosphabicyclo[3.3.1]nonan bilden.
$R^c$ ist $C_{1-6}$-Alkyl, vorzugsweise Methyl. Der Stern (*) kennzeichnet ein Chiralitätszentrum. Die 1,2-disubstituierten Ferrocene sind bekannte Verbindungen oder analog zu bekannten Verbindungen nach bekannten Methoden erhältlich. (Siehe z. B.: EP-A-0 612 758; EP-A-0 564 406; A. Togni et al., *Inorg. Chim. Acta* **1994**, *222*, 213-224.)

Die chiralen zweizähnigen Diphosphinliganden sind vorzugsweise ausgewählt aus der Gruppe bestehend aus (*R*)-2,2'-Bis(diphenylphosphino)-1,1'-binaphthalin, (*S*)-2,2'-Bis(diphenylphosphino)-1,1'-binaphthalin, (*R*)-2,2'-Bis (diphenylphosphino)-6,6'-dimethyl-1,1'-biphenyl, (*S*)-2,2'-Bis(diphenylphosphino)-6,6'-dimethyl-1,1'-biphenyl, 1-[1(*R*) -(Dicyclohexylphosphino)ethyl]-2(*S*)-(diphenylphosphino)ferrocen, 1-[1(*S*)-(Dicyclohexylphosphino)-ethyl]-2(*R*) -(diphenylphosphino)ferrocen, 1-[1(*R*)-(Diphenylphosphino)ethyl]-2(*S*)-(diphenylphosphino)ferrocen, 1-[(*S*)-(Diphenylphosphino)ethyl]-2(*R*)-(diphenylphosphino)-ferrocen, 1-[1(*R*)-(Diphenylphosphino)ethyl]-2(*S*)-(di-*tert*-butylphosphino)ferrocen, 1-[1(*S*)-(Diphenylphosphino)ethyl]-2(*R*)-(di-*tert*-butylphosphino)ferrocen, 1-{1(*R*)-[Bis(3,5-dimethylphenyl)phosphino]ethyl}-2(*S*)-(diphenylphosphino)ferrocen, 1-{1(*S*)-[Bis(3,5-dimethylphenyl)phosphino]ethyl}-2(*R*) -(diphenylphosphino)ferrocen, 1-{1(*R*)-[Bis(4-*tert*butylphenyl)phosphino]ethyl}-2(*S*)-(diphenylphosphino)ferrocen, 1-{1(*S*)-[Bis(4-*tert*-butylphenyl)phosphino]ethyl}-2(*R*)-{diphenylphosphino)terrocen, 1-[1(*S*)-(9-Phosphabicyclo[3.3.1] nonan-9-yl)ethyl]-2(*R*)-(diphenylphosphino)ferrocen und 1-[1(*R*)-(9-Phosphabicyclo[3.31]nonan-9-yl)ethyl]-2(*S*) -(diphenylphosphino)ferrocen.

Besonders bevorzugt sind diejenigen erfindungsgemässen Komplexe, in denen X Chlor ist.

Die erfindungsgemässen Komplexe können beispielsweise dadurch hergestellt werden, dass ein geeigneter Iridium(I)-olefinkomplex wie $[IrX(coe)_2]_2$ (coe = Cycloocten) oder $[IrX(C_2H_4)_4]$, worin X jeweils das im zweikernigen Komplex als Brückenligand fungierende Halogen ist, in einer Ligandenaustauschreaktion in einem unpolaren Lösungsmittel mit dem entsprechenden chiralen zweizähnigen Diphosphinliganden umgesetzt wird.

Als unpolares Lösungsmittel wird vorzugsweise Benzol oder Toluol eingesetzt.

Die Isolierung und Reinigung der erfindungsgemässen Komplexe kann nach an sich bekannten Methoden erfolgen, beispielsweise durch Einengen des Reaktionsgemisches, wobei sich die beim Ligandenaustausch freigesetzten Olefine mit dem Lösungsmittel verflüchtigen, und gegebenenfalls Umkristallisieren des Rückstands. Eine Trennung der aus Diphosphinliganden mit nicht-äquivalenten Phosphoratomen erhaltenen *cis-/trans*-Isomerengemische ist auf diese Weise jedoch in der Regel nicht möglich. Je nach Löslichkeit der Komplexe können diese auch direkt aus dem Reaktionsgemisch auskristallisieren.

Die erfindungsgemässen Komplexe werden vorzugsweise als Katalysatoren bzw. Katalysator-Vorstufen in der asymmetrischen Hydroaminierung von prochiralen Olefinen eingesetzt Mit dem Begriff "Katalysator-Vorstufe" ist

hierbei gemeint, dass sich die eigentliche katalytisch aktive Species gegebenenfalls erst unter den Reaktionsbedingungen der Hydroaminierung bildet. Unter prochiralen Olefinen sind hier solche zu verstehen, die bei der formalen Addition einer unsymmetrischen Verbindung A-B an die Doppelbindung chirale Produkte liefern. Die erfindungsgemässen Komplexe können selbstverständlich auch in der Hydroaminierung von nicht-prochiralen Olefinen eingesetzt werden; da in diesem Fall achirale Produkte entstehen, bringt die Verwendung chiraler Diphosphin-Liganden aber keine besonderen Vorteile.
Für die Verwendung als Katalysator bzw Katalysator-Vorstufe ist es nicht erforderlich, die erfindungsgemässen Komplexe zu isolieren, sondern sie können gegebenenfalls auch *in situ* hergestellt werden.
Die Hydroaminierung kann sowohl inter- als auch intramolekular erfolgen. So können beispielsweise aus *o*-Allyl- und/ oder *o*-Propenylanilinen 2-Methylindoline erhalten werden. Die Hydroaminierung läuft normalerweise so ab, dass die Aminogruppe bei Olefinen mit der Doppelbindung zwischen nicht-äquivalenten Kohlenstoffatomen an das sterisch weniger belastete Kohlenstoffatom addiert wird. Sind zwei diastereomere Additionsprodukte möglich, wie beispielsweise bei Norbornen, dann wird in der Regel das sterisch günstigere (*exo*-) Isomere gebildet.

Vorzugsweise wird die asymmetrische Hydroaminierung in Gegenwart von Fluoridionen durchgeführt. Es wurde gefunden, dass sich dadurch sowohl die Reaktivität als auch die optische Ausbeute erheblich steigern lassen.
Eine bevorzugte Ausführungsform der asymmetrischen Hydroaminierung ist ein Verfahren zur Herstellung von optisch aktiven Aminen der allgemeinen Formel

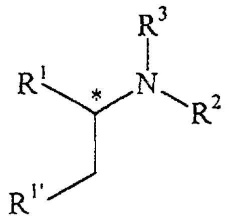

II.

Hierin bezeichnet der Stern (*) ein Asymmetriezentrum. Die Reste $R^1$ und $R^{1'}$ bedeuten entweder unabhängig voneinander jeweils eine gegebenenfalls substituierte $C_{1-6}$-Alkyl-, Aryl-, Arylalkyl-, Heteroaryl- oder (Heteroaryl)alkylgruppe, mit der Massgabe, dass nicht $R^1 = R^{1'}$-$CH_2$- ist (weil in diesem Fall das Asymmetriezentrum verschwindet), oder $R^1$ und $R^{1'}$ bilden zusammen mit den dazwischenliegenden Kohlenstoffatomen ein prochirales mono- oder bicyclisches cycloaliphatisches System. $R^2$ ist eine gegebenenfalls substituierte Aryl- oder Acylgruppe und $R^3$ Wasserstoff, eine gegebenenfalls substituierte Acyl-, Alkansulfonyl- oder Arensulfonylgruppe Die optisch aktiven Amine (II) werden erfindungsgemäss dadurch hergestellt, dass ein Olefin der allgemeinen Formel

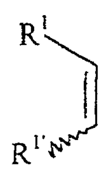

III,

in der $R^1$ und $R^{1'}$ die oben genannten Bedeutungen haben, in Gegenwart eines chiralen zweikernigen Iridium(I)phosphinkomplexes der allgemeinen Formel

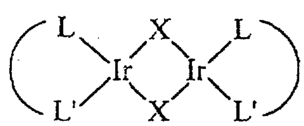

I,

in der X Fluor, Chlor, Brom oder Iod ist und

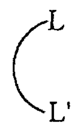

jeweils einen chiralen zweizähnigen Diphosphinliganden bedeutet, mit einem Amin oder Amid der allgemeinen Formel $R^2$-NH-$R^3$ (IV), worin $R^2$ und $R^3$ die oben genannten Bedeutungen haben, umgesetzt wird.

Unter $C_{1-6}$-Alkylgruppen sind in den vorstehenden Ausführungen und im folgenden alle linearen und verzeigten primären, sekundären oder tertiären Alkylgruppen mit 1-6 Kohlenstoffatomen zu verstehen, also beispielsweise Methyl, Ethyl, Propyl, Isopropyl, Butyl, Isobutyl, *tert*-Butyl, Pentyl und Hexyl. Entsprechend sind unter $C_{1-6}$-Alkoxygruppen die aus $C_{1-6}$-Alkyl und Sauerstoff zusammengesetzten Gruppen zu verstehen.

Unter mono- oder bicyclischen cycloaliphatischen Systemen sind insbesondere solche Systeme zu verstehen, die aus einem oder zwei Ringen mit jeweils 3 bis 7 Ringkohlenstoffatomen bestehen. Im Falle von bicyclischen Systemen können die Ringe gleiche oder verschiedene Gliederzahl aufweisen und sowohl kondensiert als auch verbrückt oder spiroverknüpft sein. Ebenso können die mono- oder bicyclischen Systeme funktionelle Gruppen und/oder Substituenten tragen.

Unter Arylgruppen sind mono- oder polycyclische aromatische Reste zu verstehen, insbesondere Gruppen wie Phenyl oder Naphthyl.

Unter Heteroarylgruppen sind entsprechend mono- oder polycyclische aromatische Reste mit einem oder mehreren Heteroatomen zu verstehen, insbesondere Gruppen wie Furyl, Thiophenyl, Pyrrolyl, Pyridyl, Pyrimidyl oder Indolyl. Entsprechend sind unter Arylalkylgruppen und (Heteroaryl)alkylgruppen Alkylgruppen zu verstehen, in denen ein Wasserstoffatom durch eine der vorstehend definierten Arylgruppen bzw. Heteroarylgruppen ersetzt ist, also beispielsweise Benzyl, Phenethyl oder Furylmethyl (Furfuryl). Alle diese Gruppen können auch einen oder mehrere gleiche oder verschiedene Substituenten tragen. Als Substituenten kommen hier ebenso wie in den oben als "gegebenenfalls substituiert" bezeichneten Gruppen alle diejenigen in Frage, die unter den Reaktionsbedingungen stabil sind und weder mit der Aminogruppe noch mit der olefinischen Doppelbindung oder dem Iridiumkomplex reagieren Insbesondere können dies beispielsweise $C_{1-4}$-Alkylgruppen, Halogene oder $C_{1-4}$-Alkoxygruppen sein.

Unter Acylgruppen sind sowohl Alkanoylgruppen, insbesondere $C_{1-6}$-Alkanoyl, als auch Aroylgruppen wie beispielsweise Benzoyl oder substituiertes Benzoyl zu verstehen.

Unter Sulfonylgruppen sind sowohl Alkansulfonylgruppen als auch Arensulfonylgruppen zu verstehen, insbesondere $C_{1-6}$-Alkansulfonyl, beispielsweise Methansulfonyl ("Mesyl"), und gegebenenfalls substituiertes Benzolsulfonyl, beispielsweise *p*-Toluolsulfonyl ("Tosyl"). Es hat sich gezeigt, dass insbesondere gespannte cyclische Olefine wie zum Beispiel Norbornen oder Cyclopropenon gute Resultate liefern.

Unter den Aminen (IV) sind solche bevorzugt, die relativ leicht deprotoniert werden können, also aromatische Amine oder *N*-Acyl- oder *N*-Sulfonyl-amine (bzw. Amide oder Sulfonamide). Bei Verwendung primärer Amide werden *N*-Acylamine (II, $R^2$ = Acyl, $R^3$ = H) gebildet, die zu primären Aminen hydrolysiert werden können.

Eine weitere bevorzugte Ausführungsform der asymmetrischen Hydroaminierung ist ein Verfahren zur Herstellung von optisch aktiven Indolinen der allgemeinen Formel

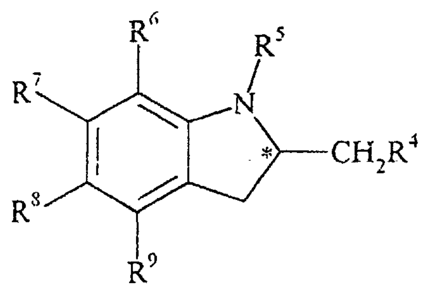

V.

worin $R^4$ Wasserstoff oder eine gegebenenfalls substituierte $C_{1-4}$-Alkylgruppe ist, $R^5$ eine der oben für $R^2$ und $R^3$ genannten Bedeutungen hat und $R^6$ bis $R^9$ unabhängig voneinander Wasserstoff, gegebenenfalls substituiertes $C_{1-6}$-Alkyl oder gegebenenfalls substituiertes $C_{1-6}$-Alkoxy bedeuten. Hierbei wird ein *o*-Alkenylanilin der allgemeinen Formel

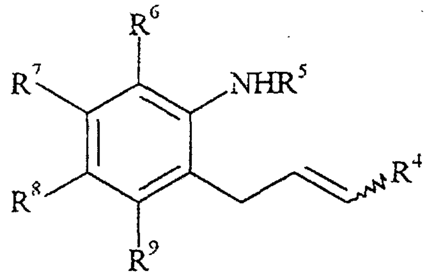

VI,

in der $R^4$ bis $R^9$ die oben genannten Bedeutungen haben, in Gegenwart eines chiralen zweikernigen Iridium(I)phosphinkomplexes der allgemeinen Formel

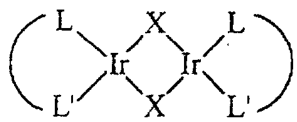

I,

in der X Fluor, Chlor, Brom oder Iod ist und

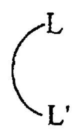

jeweils einen chiralen zweizähnigen Diphosphinliganden bedeutet, cyclisiert
Wie bereits erwähnt, wird das erfindungsgemässe Verfahren zur Herstellung der optisch aktiven Amine (II) oder Indoline (V) vorzugsweise in Gegenwart von Fluoridionen durchgeführt. Die Fluoridionen liegen vorzugsweise in "nackter" Form, also nicht solvatisiert oder als Ionenpaar, vor Als Quelle für Fluoridionen kann beispielsweise Thallium(I)fluorid oder ein Alkalifluorid, dessen Kation durch einen geeigneten Kronenether oder Kryptanden komplexiert ist, eingesetzt werden.

Besonders bevorzugt sind Fluoride oder komplexe Fluoride organischer Basen wie beispielsweise Tetramethylammoniumfluorid oder Tetrabutylamrnonium-triphenyldifluorosilicat.

Ganz besonders bevorzugt als Quelle für "nackte" Fluoridionen ist das 1,1,1,3,3,3-Hexakis(dimethylamino) diphosphazenium-fluorid.

Im erfindungsgemässen Verfahren zur Herstellung der optisch aktiven Amine (II) oder Indoline (V) werden als Katalysatoren vorzugsweise solche Iridium((I)-phosphinkomplexe (I) eingesetzt, in denen die chiralen zweizähnigen Diphosphinliganden aus der Gruppe bestehend aus (*R*)-2,2'-Bis(diphenylphosphino)-1,1'-binaphthalin, (*S*)-2,2'-Bis (diphenylphosphino)-1,1'-binaphthalin, (*R*)-2,2'-Bis(diphenylphosphino)-6,6'-dimethyl-1,1'-biphenyl, (*S*)-2,2'-Bis (diphenylphosphino)-6,6'-dimethyl-1,1'-biphenyl, 1-[1(*R*)-(Dicyclohexylphosphino)ethyl]-2(*S*)-(diphenylphosphino)ferrocen, 1-[1(*S*)-(Dicyclohexylphosphino)-ethyl]-2(*R*)-(diphenylphosphino)ferrocen, 1-[1(*R*)-(Diphenylphosphino)ethyl]-2(*S*)-(diphenylphosphino)ferrocen, 1-[1(*S*)-(Diphenylphosphino)ethyl]-2(*R*)-(diphenylphosphino)-ferrocen, 1-{1(*R*) -[Bis(3,5-dimethylphenyl)phosphino]ethyl}-2(*S*)-(diphenylphosphino)-ferrocen und 1-{1(*S*)-[Bis(3,5-dimethylphenyl) phosphino]ethyl}-2(*R*)-(diphenylphosphino)-ferrocen ausgewählt sind.

Ebenfalls bevorzugt als Katalysatoren sind diejenigen Iridium(I)-phosphinkomplexe (I), in denen X Chlor ist.

In einer bevorzugten Ausführungsform des erfindungsgemässen Verfahrens zur Herstellung der optisch aktiven Amine (II) bilden $R^1$ und $R^{1'}$ zusammen eine Cyclopentan-1,3-diylaruppe, d. h. es wird Norbornen (Bicyclo[2.2.1] hept-2-en) als Olefin (III) eingesetzt. In einer weiteren bevorzugten Ausführungsform des erfindungsgemässen Verfahrens zur Herstellung der optisch aktiven Amine (II) ist $R^2$ eine gegebenenfalls substituierte Phenylgruppe, d. h. es wird ein gegebenenfalls substituiertes Anilin als Amin (IV) eingesetzt.

Die nachfolgenden Beispiele verdeutlichen die Ausführung der Erfindung, ohne dass darin eine Einschränkung zu sehen ist Alle Operationen wurden unter Schutzgas und Feuchtigkeitsausschluss durchgefuhrt.

**Beispiel 1**

**Di-μ-chloro-tetrakis-($\eta^2$-cycloocten)-diiridium(I)**

Zu einer Suspension aus 6,08 g (10 mmol) Ammoniumhexachloroiridat(IV) in 30 ml Isopropylalkohol und 90 ml Wasser wurden 12 ml Cycloocten gegeben und das Ganze 3 h unter Rückfluss gekocht. Nach dem Abkühlen auf Raumtemperatur wurde die überstehende Lösung abdekantiert und der orangegelbe Rückstand in 30 ml Ethanol digeriert. Dann wurde auf 0 °C abgekühlt und unter Argon über Celite filtriert. Das so erhaltene Produkt wurde über Nacht im Hochvakuum getrocknet und bei -25 °C unter Ausschluss von Sauerstoff und Licht aufbewahrt.

| | |
|---|---|
| $^1$H NMR ($CDCl_3$, 250 MHz): δ | 1,2-1,7 (8H); 2,2-2,4 (6H). |
| $^{13}$C NMR ($CDCl_3$, 60 MHz): δ | 26,4; 29,9; 30,3; 63,4. |

**Beispiel 2**

***cis*- and *trans*-Di-μ-chloro-bis{1-[1(*R*)-(dicyclohexylphosphino)ethyl]-2(*S*)-(diphenylphosphino)ferrocen}-1$\kappa^2 P^1, P^2; 2\kappa^2 P^{1'}, P^{2'}$-diiridium(I)**

Durch eine gelbe Suspension von 2,961 g (3,305 mmol) Di-μ-chloro-tetrakis-($\eta^2$-cycloocten)-diiridium(I) in 30 ml Heptan wurde bei 0 °C für 10 min Ethen geleitet. Das Gemisch wurde auf-78 °C abgekühlt und unter Rühren mit 120 ml Pentan versetzt, wobei sich ein weisslicher Festkörper bildete. Die überstehende Lösung wurde abdekantiert und 100 ml Toluol wurden zugegeben. Zu dem gelblichen Gemisch wurde bei -78 °C innerhalb von 15 min eine Lösung von 3,930 g (6,610 mmol) 1-[1(*R*)-(Dicyclohexylphosphino)ethyl]-2(*S*)-(diphenylphosphino)ferrocen zugetropft. Man liess das Reaktionsgemisch über Nacht langsam auf Raumtemperatur kommen, wobei überschüssiges Ethen entweichen konnte. Dann wurde das Gemisch im Vakuum eingeengt und der Rückstand aus Benzol/Pentan umkristallisiert. Nach Trocknen im Vakuum wurde ein feines orangefarbenes Pulver erhalten Gemäss $^1$H NMR enthielt das Produkt je ½ Molekül Benzol und Pentan pro zweikernigem Komplex, was im Einklang mit dem Ergebnis der Elementaranalyse stand.
Ausbeute: 3,05 g (84%).

| | | | |
|---|---|---|---|
| $C_{72}H_{88}Cl_2Fe_2Ir_2P_4 \cdot ½C_6H_6 \cdot ½\ C_5H_{12}$: | Ber. | C 54,13 | H 5,69 |
| | Gef. | C 54,30 | H 5,98 |

$^{31}$P{$^1$H} NMR ($C_6D_6$, 100 MHz): AA'XX'-System, zwei Isomere.
δ-0,13 ($^2J_{PP'}$ + $^4J_{PP'}$ = 29,9 Hz) (Isomer A); 0,07 ($^2J_{PP'}$ + $^4J_{PP'}$ = 35,2 Hz) (Isomer B);
30,16 ($^2J_{PP'}$ + $^4J_{PP'}$ = 30,1 Hz) (Isomer A); 30,95 ($^2J_{PP'}$ + $^4J_{PP'}$ = 35,0 Hz) (Isomer B).
$^1$H NMR ($C_6D_6$, 250 MHz):
δ 0,85-2,30 (m, 48H), 2,50-2,75 (m, 2H); 2,75-3,20 (m, 2H); 3,55 und 3,63 (2 s, 10H); 3,75-4,00 (m, 2H); 3,97 (m, 2H); 4,08 (m, 2H); 4,25-4,35 (m, 2H); 7,00-7,40 (m, 12H), 7,55-7,75 (m, 2H); 7,75-7,85 (m, 2H); 8,30-8,45 (m, 2H); 8,60-8,75 (m, 2H).

**Beispiel 3**

***cis*- und *trans*-Di-μ-chloro-bis{1-[1(*R*)-(diphenylphosphino)ethyl]-2(*S*)-(diphenylphosphino)ferrocen}-1$\kappa^2 P^1$, $P^2; 2\kappa^2 P^{1'}, P^{2'}$-diiridium(I)**

Zu einer hellorangen Suspension von 2,54 g (2,81 mmol) Di-μ-chloro-tetrakis-($\eta^2$-cycloocten)-diiridium(I) in 20 ml Benzol wurde innerhalb von 20 min eine Lösung von 3,27 g (5,62 mmol) 1-[1(*R*)-(Diphenylphosphino)ethyl]-2(*S*)-(diphenylphosphino)ferrocen in 20 ml Benzol getropft. Das Reaktionsgemisch wurde über Nacht bei 4 °C stehengelassen, wobei ein orangefarbener mikrokristalliner Niederschlag ausfiel. Dieser wurde abfiltriert und 24 h im Vakuum getrocknet Gemäss $^1$H NMR enthielt das Produkt 1½ Moleküle Benzol pro zweikernigem Komplex, was im Einklang mit dem Ergebnis der Elementaranalyse stand. Ausbeute: 3,95 g (85%).

| | | | |
|---|---|---|---|
| $C_{72}H_{64}Cl_2Fe_2Ir_2P_4 \cdot 1{,}5\ C_6H_6$ | Ber | C 56,00 | H 4,24 |
| | Gef | C 56,03 | H 4,33 |

$^{31}P\{^1H\}$ NMR (THF-$d_8$, 100 MHz): AA'XX'-System, zwei Isomere
δ -2.82 ($^2J_{PP'}$ + $^4J_{PP'}$ = 38,5 Hz) (Isomer A); -1,98 ($^2J_{PP'}$ + $^4J_{PP'}$ = 30,7 Hz) (Isomer B);
23,35 ($^2J_{PP'}$ + $^4J_{PP'}$ = 38,5 Hz) (Isomer A); 24,34 ($^2J_{PP'}$ + $^4J_{PP'}$ = 30,7 Hz) (Isomer B)
$^1H$ NMR (THF-$d_8$, 250 MHz):
δ 0,60-0,85 (m, 6H); 3,43 und 3,50 (2 s, 10H); 3,50-3,90 (m, 4H); 4,10 (m, 2H);
4,19 (m, 2H); 6,85-7,65 (m, 28H); 8,00-8,35 (m, 10H); 8,50-8,65 (m, 2H).

**Beispiel 4**

***cis-* und *trans*-Di-μ-chloro-bis<1-{1(*R*)-[bis(3,5-dimethylphenyl)phosphino]ethyl}-2(*S*)-(diphenylphosphino) ferrocen)-1κ²*P*¹,*P*²;2κ²*P*¹',*P*²'-diiridium(I)**

Zu einer hellorangen Suspension von 1,416 g (1,566 mmol) Di-μ-chloro-tetrakis-(η²-cycloocten)-diiridium(I) in 40 ml Benzol wurde unter Rühren innerhalb von 20 min eine Lösung von 2,001 g (3,133 mmol) 1-{1(*R*)-[Bis(3,5-dimethylphenyl)phosphino]ethyl}-2(*S*)-(diphenylphosphino)ferrocen in 40 ml Benzol getropft, wobei sich eine tiefrote klare Lösung bildete. Nach weiteren 15 min wurde das Lösungsmittel im Vakuum abdestilliert. Der orange Rückstand wurde mit Pentan gewaschen und im Vakuum getrocknet.
Ausbeute: 2,40 g (88%) gelbes Pulver.

| | | | |
|---|---|---|---|
| $C_{80}H_{80}Cl_2Fe_2Ir_2P_4$ | Ber. | C 55,46 | H 4,65 |
| | Gef | C 55,18 | H 4,80 |

$^{31}P\{^1H\}$ NMR ($C_6D_6$, 100 MHz): AA'XX'-System, zwei Isomere.
δ -4,22 ($^2J_{PP'}$ + $^4J_{PP'}$ = 38,3 Hz) (Isomer A); -1,01 ($^2J_{PP'}$ + $^4J_{PP'}$ = 30,6 Hz) (Isomer B);
22,70 ($^2J_{PP'}$ + $^4J_{PP'}$ = 38,2 Hz) (Isomer A); 26,73 ($^2J_{PP'}$ + $^4J_{PP'}$ = 30,6 Hz) (Isomer B).
$^1H$ NMR ($C_6D_6$, 250 MHz):
δ 1,05-1,20 (m, 6H, Isomer A); 1,25-1,35 (m, 6H, Isomer B); 2,12 (s, 12H, Isomer B); 2,17 (s, 12 H, Isomer B); 2,22 (s, 12H, Isomer A); 2,38 (s, 12H, Isomer A); 3,57 (s, 10H, Isomer B); 3,68 (s, 10H, Isomer A); 3,75-4,20 (m, 8H, Isomere A + B); 6,75-8,55 (m, 32H, Isomere A + B).

**Beispiel 5**

***cis-* und *trans*-Di-μ-chloro-bis{1-[1(*R*)-(diphenylphosphino)ethyl]-2(*S*)-(di-*tert*butylphosphino)ferrocen}-1κ²*P*¹, *P*²;2κ²*P*¹',*P*²'-diiridium(1)**

Durch eine Suspension von 264,4 mg (275 μmol) Di-μ-chloro-tetrakis-(η²-cycloocten)-diiridium(1) in 2 ml Heptan wurde bei 0 °C für 10 min Ethylen durchgeleitet. Nach dem Abkühlen der Suspension auf-78 °C wurden unter Rühren 2 ml Hexan zugegeben und nach weiteren 10 min Rühren die überstehende Lösung abdekantiert. Der leicht gelbliche Niederschlag wurde im Hochvakuum kurz getrocknet und dann in 2 ml Toluol gelöst. Zu der so erhaltenen trüben gelben Lösung wurde innerhalb von 15 min eine Lösung von 1-[1(*R*)-(Diphenylphosphino)ethyl]-2(*S*)-(di-*tert*-butylphosphino)ferrocen (300,4 mg, 0,55 mmol) in 2 ml Toluol zugetropft, wobei die Temperatur unter -73 °C gehalten wurde.
Danach wurde das Gemisch über Nacht auf Raumtemperatur erwärmt, wobei darauf geachtet wurde, dass das überschüssige Ethylen entweichen konnte. Die flüchtigen Bestandteile wurden im Vakuum entfernt und der Rückstand mit Hexan gewaschen und getrocknet.
Ausbeute: 329 mg (77% bezogen auf das eingesetzte Diphosphin) orange Pulver.
$^{31}P$ NMR ($C_6D_6$, 100 MHz) zwei Isomere
δ 13,5 (d, $^2J_{PP'}$ + $^4J_{PP'}$ = 20,5 Hz), 18,9 (d, $^2J_{PP'}$ + $^4J_{PP'}$ = 19,8 Hz),
24,3 (d, $^2J_{PP'}$ + $^4J_{PP'}$ = 33,3 Hz), 26,5 (d, $^2J_{PP'}$ + $^4J_{PP'}$ = 33,2 Hz).

**Beispiel 6**

***cis-* und *trans*-Di-μ-chloro-bis{1-[1(*R*)-(9-phosphabicyclo[3.3.1]nonan-9-yl)ethyl]-2(*S*)-(diphenylphosphino) ferrocen}-1κ²*P*¹,*P*²;2κ²*P*¹',*P*²'-diiridium(I)**

Analog zu Beispiel 5 wurden 830 mg (0,9 mmol) Di-μ-chloro-tetrakis-(η²-cycloocten)-diiridium(I) mit 1,00 g (1,86 mmol) 1-[1(*R*)-(9-Phosphabicyclo[3.3.1]nonan-9-yl)ethyl]-2(*S*)-(diphenylphosphino)ferrocen umgesetzt.

$^{31}P$ NMR ($C_6D_6$, 100 MHz) zwei Isomere
δ -5,2 (d, $^2J_{PP'} + ^4J_{PP'}$ = 39,3 Hz); -1,8 (d, $^2J_{PP'} + ^4J_{PP'}$ = 39,0 Hz), 1,0 (d, $^2J_{PP'} + ^4J_{PP'}$ = 42,5 Hz); 3,4 (d, $^2J_{PP'} + ^4\bar{J}_{PP'}$ = 42,1 Hz).

**Beispiel 7**

**Di-μ-chloro-bis-[(*S*)-2,2'-bis(diphenylphosphino)-1,1'-binaphthalin]1κ²*P*¹,*P*²;2κ²*P*¹',*P*²'-diiridium(1)**

Zu einer Suspension von 349 mg (389 μmol) Di-μ-chloro-tetrakis-(η²-cycloocten)-diiridium(I) in 4 ml Benzol wurde unter Rühren eine Suspension von 484 mg (777 μmol) (*S*)-2,2'-Bis(diphenylphosphino)-1,1'-binaphthalin in 4 ml Benzol getropft, wobei sich eine tiefrote Lösung bildete. Nach 20 h bei Raumtemperatur wurde das Lösungsmittel im Vakuum abdestilliert. Der Rückstand wurde mit 2 × 4 ml kaltem Pentan gewaschen und im Vakuum getrocknet. Gemäss $^1H$ NMR enthielt das Produkt ½ Molekül Pentan pro zweikernigem Komplex, was im Einklang mit dem Ergebnis der Elementaranalyse stand.
Ausbeute: 580 mg (88%) rotes Pulver.

| | | | |
|---|---|---|---|
| $C_{88}H_{64}Cl_2Ir_2P_4 \cdot ½C_5H_{12}$ | Ber.<br>Gef. | C 62,59<br>C 62,99 | H 4,06<br>H 4,01 |

$^{31}P\{^1H\}$ NMR ($C_6D_6$) δ 14,14(s).
$^1H$ NMR ($C_6D_6$): δ 6,67-8,53 (m).
Die Struktur des Komplexes wurde durch eine Einkristall-Röntgenstrukturanalyse bestätigt. Rubinrote monokline Einkristalle (mit je 1 Molekül Diethylether und Tetrahydrofuran) wurden durch Diffusion von Diethylether und Tetrahydrofuran in eine gesättigte Lösung in
Toluol erhalten.
Kristallographische Daten von $C_{88}H_{64}Cl_2Ir_2P_4 \cdot C_4H_{10}O \cdot C_4H_8O$ (bei -30 °C):
*a* = 17,0108 Å; *b* = 13,6600 Å; *c* = 18,9391 Å
β = 115,8189°
Raumgruppe $P2_t$ (Nr. 4); *Z* = 2.

**Beispiel 8**

**Di-μ-chloro-bis-[(*R*)-2,2'-bis(diphenylphosphino)-6,6'-dimethyl-1,1'-biphenyl]-1κ²*P*¹,*P*²;2κ²*P*¹',*P*²'-diiridium(I)**

Zu einer Suspension von 438 mg (488 μmol) Di-μ-chloro-tetrakis-(η²-cycloocten)-diiridium(I) in 1,5 ml Benzol wurde unter Rühren eine Lösung von 538 mg (977 μmol) (*R*)-2,2'-Bis(diphenylphosphino)-6,6'-dimethy!-1,1'-biphenyl in 1,5 ml Benzol getropft, wobei sich eine klare rote Lösung bildete Nach 20 h bei Raumtemperatur wurde das Lösungsmittel im Vakuum abdestilliert. Der Rückstand wurde mit 5 1 ml kaltem Pentan gewaschen und im Vakuum getrocknet.
Ausbeute: 659 mg (87%) rotes Pulver.

| | | | |
|---|---|---|---|
| $C_{78}H_{64}Cl_2Ir_2P_4$ | Ber.<br>Gef. | C 58,64<br>C 58,41 | H 4,14<br>H 3,91 |

$^{31}P\{^1H\}$ NMR ($C_6D_6$): δ 13,46(s).
$^1H$ NMR ($C_6D_6$): δ 1,43 (s, 12H); 6,51-8,33 (m, 52H).

**Beispiel 9**

***exo-N*-Phenyl-bicyclo[2.2.1]heptan-2-amin**

Zu einem Gemisch von 575 mg (6,11 mmol) Norbornen und 569 mg (6,11 mmol) Anilin wurde mit einer Spritze 0,12 ml einer Lösung von 1,1,1,3,3,3-Hexakis(dimethylamino)diphosphazenium-fluorid (ca. 0,5 M in Benzol, ca. 60 μmol) gegeben. Die so erhaltene Lösung wurde zu 53,0 mg (30,5 μmol) *cis*- und *trans*-Di-μ-chloro-bis{1-[1(*R*)-(dicyclohexylphosphino)ethyl]-2(*S*)-(diphenylphosphino)ferrocen}-1κ²*P*¹,*P*²,2κ²*P*¹',*P*²'-diiridium(I) (aus Beispiel 1, als Toluol-Solvat) gegeben. wobei sich eine klare orange Lösung bildete. Diese wurde in einem geschlossenen Gefäss bei 50 °C 72 h gerührt und dann durch Luftzutritt gequencht. Das Produkt wurde durch Säulenchromatographie an Kieselgel

(*l* = 10 cm, *d* = 2 cm, Ethylacetat/Hexan 1:10) gereinigt.
Ausbeute: 814 mg (80%) blassgelbes Öl.
Die optische Ausbeute wurde durch HPLC (stationäre Phase: Daicel Chiralcel® OJH, mobile Phase: Hexan/2-Propanol 90:10) bestimmt. Die Retentionszeiten betrugen 15,5 min für das (2*R*)-Enantiomere und 17,2 min für das (2*S*)-Enantiomere. Es wurde ein ee-Wert von 50% zugunsten des (2*R*)-Enantiomeren gefunden.

**Beispiele 10-23**

***exo-N*-Phenyl-bicyclo[2.2.1]heptan-2-amin**

Es wurde verfahren wie in Beispiel 6 beschrieben, wobei jedoch die eingesetzten Iridiumkomplexe, Reaktionstemperaturen und Fluoridmengen variiert wurden. Die Resultate sind in der nachfolgenden Tabelle 1 zusammengefasst.

Tabelle 1

| Kat. aus Beispiel | ϑ [°C] | [F⁻]/[Ir] | Ausbeute [%][c] | ee [%] (Konfig.) |
|---|---|---|---|---|
| 2[a] | 50 | 0 | 12 | 51 (2*S*) |
| 2[a] | 50 | 0,25 | 76 | 31(2*R*) |
| 2[a] | 50 | 4 | 51 | 16 (2*R*) |
| 2[a] | 25 | 1 | 12 | 60 (2*R*) |
| 2[a] | 75 | 1 | 81[d] | 38(2*R*) |
| 3[a] | 50 | 1 | 27 | 9 (2*R*) |
| 4[a] | 50 | 1 | 36 | 26 (2*R*) |
| 7[b] | 50 | 0 | 12 | 57 (2*R*) |
| 7[b] | 75 | 2 | 45 | 78 (2*R*) |
| 7[b] | 75 | 4 | 22 | 95 (2*R*) |
| 8[b] | 50 | 1 | 13 | 51 (2*S*) |
| 8[b] | 75 | 1 | 37 | 43 (2*S*) |
| 8[b] | 75 | 2 | 27 | 69 (2*S*) |
| 8[b] | 75 | 4 | 24 | 92 (2*S*) |

[a] 1 mol% Ir.
[b] 2 mol% Ir. Reaktionsdauer.
[c] Isolierte Ausbeute
[d] 24 h Reaktionsdauer.

**Beispiel 24**

***p*-Toluolsulfonsäure-*o*-allylanilid**

Eine Lösung von 7,56 g (56,8 mmol) *o*-Allylanilin (erhältlich aus *N*-Allylanilin durch $BF_3$katalysierte Umlagerung) in 50 ml Dichlormethan wurde mit 10,8 g (56,8 mmol) *p*-Toluolsulfochlorid und 6 ml Pyridin versetzt und für 2 h zum Rückfluss erhitzt. Anschliessend wurde das Lösungsmittel abdestilliert und der gelbe viskose Rückstand mit 1 M Natronlauge geschüttelt. Die Phasen wurden getrennt und die wässrige Phase angesäuert und mit Toluol extrahiert.
Ausbeute: 10,0 g (61,3%) farbloses Öl, erstarrt bei 4 °C.
$^1$H NMR ($CDCl_3$, 250 MHz):
δ 2,40 (s, 3H); 3,02 (d, *J* = 6,0 Hz, 1H); 4,94 (dd, *J* = 17,0 und 1,8 Hz, 1H);
5,09 (dd, *J* = 10,3 und 1,5 Hz, 1H); 5,78 (tdd, *J* = 6,0; 17,3 und 10,3 Hz, 1H); 6,63 (s, 1H). 7,0-7,7 (m, 8H).
$^{13}$C NMR ($CDCl_3$, 60 MHz):
δ 21,5; 38,0; 117,1; 124.4; 126,2; 127,1; 127,7; 129,6; 130,5; 135,5.

**Beispiel 25**

**Methansulfonsäure-*o*-allylanilid**

Analog zu Beispiel 24 wurde aus 2,31 g (17,3 mmol) *o*-Allylanilin, 1,5 ml Methansulfonylchlorid und 1,5 ml Pyridin in 20 ml Benzol ein zähflüssiges Öl erhalten, welches mittels Flash-Chromatographie (Kieselgel 60, Laufmittel Toluol/Ethylacetat 7:1) gereinigt wurde.
Ausbeute: 1,37 g (37%, bezogen auf *o*-Allylanilin).
'H NMR ($CDCl_3$, 250 MHz):
$\delta$ 3,01 (s, 3H); 3,44 (d, *J* = 6,0 Hz, 2H); 5,08 (dd, *J* = 17,3 und 1,5 Hz, 1H);
5,19 (dd, *J* = 10,3 und 1,5 Hz, 1H); 5,96 (tdd, *J* = 6,0; 17,3 und 10,3 Hz, 1H); 6,44 (s, 1H), 7,2-7,5 (m, 4H).
$^{13}C$ NMR ($CDCl_3$, 60 MHz):
37; 42; 117; 128; 129; 136.

**Beispiele 26-29**

**2-Methyl-*N*-*p*-toluolsulfonylindolin**

Allgemeine Vorschrift:

*p*-Toluolsulfonsäure-*o*-allylanilid (100 mg) wurde mit 5 mg (ca. 1 mol%) des Iridium(I)-phosphinkomplexes in 0,1 ml einer 0,6 M Lösung von 1,1,1,3,3,3-Hexakis(dimethylamino)-diphosphazeniumfluorid in Benzol gelöst und dann mit 0,5 ml Toluol in einen Schlenk-Kolben übergeführt. Diese Lösung wurde bei der jeweiligen Reaktionstemperatur für die Dauer der Reaktion gerührt. Anschliessend wurde das Lösungsmittel im Vakuum abdestilliert und der Rückstand mit Hexan/Ethylacetat über Kieselgel 60 filtriert. Nach Eindampfen des Laufmittels und Trocknung im Hochvakuum wurden durch Integration der Signale im $^1H$ NMR-Spektrum die Produktverhältnisse bestimmt.
Zur Bestimmung der ee-Werte ("enantiomeric excess") wurde die *p*-Toluolsulfonylgruppe mit HBr/Eisessig in Phenol bei 80 °C abgespalten. Das Reaktionsgemisch wurde dann in Toluol aufgenommen, die Lösung mit Natronlauge und gesättigter Natriumcarbonatlösung gewaschen, über Magnesiumsulfat getrocknet und im Vakuum eingeengt. Der Rückstand wurde im Kugelrohr destilliert (160 °C, ca. 10 mbar). Das Destillat wurde durch HPLC (Chiralcel® OD-H, 4,6 × 250 mm, Korngrösse 5 µm, Laufmittel Hexan/Isopropylalkohol 99.1 mit 0,3% Diethylamin, Flussrate 0,5 ml/min, UV-Detektion bei 300 nm) in die Enantiomeren getrennt.

Die Ergebnisse sind in der folgenden Tabelle 2 zusammengefasst. Der Umsatz betrug jeweils 100%.

Tabelle 2

| Kat. aus Beispiel | $\vartheta$ [°C] | *t* | Ausbeute [%] | ee [%] |
|---|---|---|---|---|
| 5 | 120 | 18 h | 18,6 | 47,4 |
| 2 | 120 | 18 h | 25,5 | 57,3 |
| 5 | 80 | 14 d | 15,3 | 35,7 |
| 2 | 80 | 14 d | 26,1 | 57,9 |

**Beispiele 30-32**

**2-Methyl-*N*-p-methansulfonylindolin**

Es wurde verfahren wie in der allgemeinen Vorschrift zu den Beispielen 26-29 beschriebe jedoch wurde statt *p*-Toluolsulfonsäure-*o*-allylanilid Methansulfonsäure-*o*-allylanilid eingesetzt. Die Ergebnisse sind in der folgenden Tabelle 3 zusammengefasst.

Tabelle 3

| Kat. aus Beispiel | $\vartheta$ [°C] | *t* | Umsatz [%] | Ausbeute [%] | ee [%] |
|---|---|---|---|---|---|
| 5 | 25 | 3-4 d | 26,5 | 8,2 | 52 |
| 5 | 120 | 18 h | 100 | 21,6 | 35,3 |
| 2 | 25 | 3-4 d | 100 | 14 | 43,6 |

## Patentansprüche

1. Iridium(I)-phosphinkomplexe der allgemeinen Formel

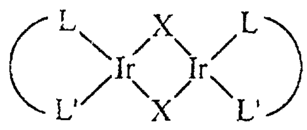

I,

worin X Fluor, Chlor, Brom oder Iod ist und

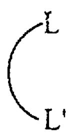

jeweils einen chiralen zweizähnigen Diphosphinliganden bedeutet, einschliesslich deren *cis*-/*trans*-Isomeren und Isomerengemische.

2. Iridium(I)-phosphinkomplexe nach Anspruch 1 in fester Form.

3. Iridium(I)-phosphinkomplexe nach Anspruch 1 oder 2, **dadurch gekennzeichnet, dass** der chirale zweizähnige Diphosphinligand ein 1,2-disubstituiertes Ferrocen mit den Phosphinogruppen als und/oder an den beiden Substituenten ist.

4. Iridium(I)-phosphinkomplexe nach Anspruch 1 oder 2, **dadurch gekennzeichnet, dass** der chirale zweizähnige Diphosphinligand ausgewählt ist aus der Gruppe bestehend aus (*R*)-2,2'-Bis(diphenylphosphino)-1,1'-binaphthalin, (*S*)-2,2'-Bis(diphenylphosphino)-1,1'-binaphthalin, (*R*)-2,2'-Bis(diphenylphosphino)-6,6'-dimethyl-1,1'-biphenyl, (*S*)-2,2'-Bis(diphenylphosphino)-6,6'-dimethyl-1,1'-biphenyl, 1-[1(*R*)-(Dicyclohexylphosphino)ethyl]-2(*S*)-(diphenylphosphino)ferrocen, 1-[1(*S*)-(Dicyclohexylphosphino)ethyl]-2(*R*)-(diphenylphosphino)ferrocen, 1-[1(*R*)-(Diphenylphyosphino)ethyl]-2(*S*)-(diphenylphosphino)ferrocen, 1-[1(*S*)-(Diphenylphosphino)ethyl]-2(*R*)-(diphenylphosphino)ferrocen, 1-[1(*R*)-(Diphenylphosphino)ethyl]-2(*S*)-(di-*tert*-butylphosphino)ferrocen, 1-[1(*S*)-(Diphenylphosphino)ethyl]-2(*R*)-(di-*tert*-butylphosphino)-ferrocen, 1-{1(*R*)-[Bis(3,5-dimethylphenyl)phosphino]ethyl}-2(*S*)-(diphenylphosphino)ferrocen, 1-{1(*S*)-[Bis(3,5-dimethylphenyl)phosphino]ethyl]ethyl]-2(*R*)-(diphenylphosphino)ferrocen, 1-{1(*R*)-[Bis(4-*tert*-butylphenyl)phosphino]ethyl}-2(*S*)-(diphenylphosphino)ferrocen, 1-{1(*S*)-[Bis(4-*tert*-butylphenyl)phosphino]ethyl}-2(*R*)-(diphenylphosphino)ferrocen, 1-[1(*S*)-(9-Phosphabicyclo[3.3.1]nonan-9-yl)ethyl]-2(*R*)-(diphenylphosphino)ferrocen und 1-[1(*R*)-(9-Phosphabicyclo[3.3.1]nonan-9-yl)ethyl]-2(*S*)-(diphenylphosphino)ferrocen.

5. Iridium(I)-phosphinkomplexe nach einem der Ansprüche 1 bis 4, **dadurch gekennzeichnet, dass** X Chlor ist.

6. Verfahren zur Herstellung von Iridium(I)-phosphinkomplexen gemäss einem der Ansprüche 1 bis 5, **dadurch gekennzeichnet, dass** ein Iridium(I)komplex der Formel $[IrX(coe)_2]_2$ oder $[IrX(C_2H_4)_4]$, worin X die in Anspruch 1 genannte Bedeutung hat und coe Cycloocten bedeutet, in einem unpolaren Lösungsmittel mit dem entsprechenden chiralen zweizähnigen Diphosphin umgesetzt wird.

7. Verwendung der Iridium(I)-phosphinkomplexe gemäss einem der Ansprüche 1 bis 5 als Katalysator in der asymmetrischen Hydroaminierung von prochiralen Olefinen

8. Verwendung nach Anspruch 7, **dadurch gekennzeichnet, dass** die Hydroaminierung in Gegenwart von Fluoridionen durchgeführt wird.

9. Verfahren zur Herstellung von optisch aktiven Aminen der allgemeinen Formel

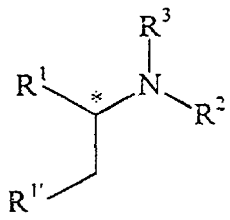

II,

worin entweder $R^1$ und $R^{1'}$ unabhängig voneinander jeweils eine gegebenenfalls substituierte $C_{1-6}$-Alkylgruppe, eine gegebenenfalls substituierte Arylgruppe, eine gegebenenfalls substituierte Arylalkylgruppe, eine gegebenenfalls substituierte Heteroarylgruppe oder eine gegebenenfalls substituierte (Heteroaryl)alkylgruppe bedeuten, mit der Massgabe, dass $R^1$ nicht $R^{1'}$-$CH_2$- ist, oder $R^1$ und $R^{1'}$ zusammen mit den dazwischenliegenden Kohlenstoffatomen ein prochirales mono- oder bicyclisches cycloaliphatisches System biiden,
$R^2$ eine gegebenenfalls substituierte Arylgruppe oder Acylgruppe
und $R^3$ Wasserstoff oder eine gegebenenfalls substituierte Acylgruppe,
Alkansulfonylgruppe oder Arensulfonylgruppe ist.
**dadurch gekennzeichnet, dass** ein Olefin der allgemeinen Formel

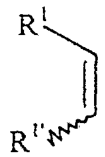

III,

in der $R^1$ und $R^{1'}$ die oben genannten Bedeutungen haben, in Gegenwart eines chiralen zweikernigen Iridium(I) phosphinkomplexes der allgemeinen Formel

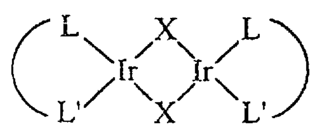

I,

in der X Fluor, Chlor, Brom oder Iod ist und

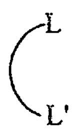

jeweils einen chiralen zweizähnigen Diphosphinliganden bedeutet, mit einem Amin oder Amid der allgemeinen Formel $R^2$-NH-$R^3$ (IV), worin $R^2$ und $R^3$ die oben genannten Bedeutungen haben, umgesetzt wird

**10.** Verfahren zur Herstellung von optisch aktiven indolinen der allgemeinen Formel

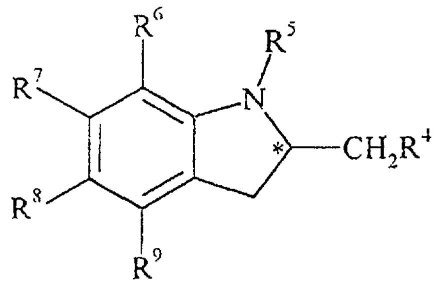

V,

worin $R^4$ Wasserstoff oder eine gegebenenfalls substituierte $C_{1-4}$-Alkylgruppe ist, $R^5$ eine der oben für $R^2$ und $R^3$ genannten Bedeutungen hat und $R^6$ bis $R^9$ unabhängig voneinander Wasserstoff, gegebenenfalls substituiertes $C_{1-6}$-Alkyl oder gegebenenfalls substituiertes $C_{1-6}$-Alkoxy bedeuten, **dadurch gekennzeichnet, dass** ein *o*-Alkenylanilin der allgemeinen Formel

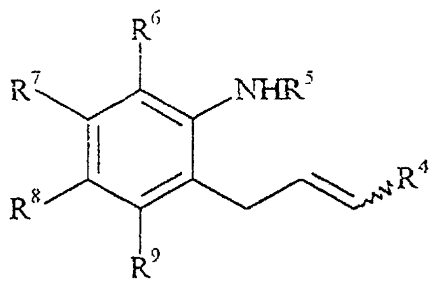

VI,

in der $R^4$ bis $R^9$ die oben genannten Bedeutungen haben, in Gegenwart eines chiralen zweikernigen Iridium(1) phosphinkomplexes der allgemeinen Formel

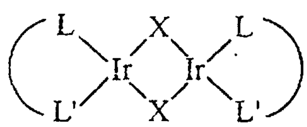

I,

in der X Fluor, Chlor, Brom oder Iod ist und

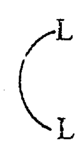

jeweils, einen chiralen zweizähnigen Diphosphinliganden bedeutet, cyclisiert wird.

11. Verfahren nach Anspruch 9 oder 10, **dadurch gekennzeichnet, dass** die Reaktion in Gegenwart von Fluoridionen durchgeführt wird.

12. Verfahren nach Anspruch 11, **dadurch gekennzeichnet, dass** die Fluoridionen in Form des Fluorids einer organischen Base eingesetzt werden.

13. Verfahren nach Anspruch 12, **dadurch gekennzeichnet, dass** als Fluorid einer organischen Base 1,1,1,3,3,3-Hexakis(dimethylamino)diphosphazenium-fluorid eingesetzt wird.

14. Verfahren nach einem der Ansprüche 9 bis 13, **dadurch gekennzeichnet, dass** der chirale zweizähnige Diphosphinligand ausgewählt ist aus der Gruppe bestehend aus (*R*)-2,2'-Bis(diphenylphosphino)-1,1'-binaphthalin, (*S*)-2,2'-Bis(diphenylphosphino)-1,1'-binaphthalin, (*R*)-2,2'-Bis(diphenylphosphino)-6,6'-dimethyl-1,1'-biphenyl, (*S*)-2,2'-Bis(diphenylphosphino)-6,6'-dirnethyl-1,1'-biphenyl, 1-[1(*R*)-(Dicyclohexylphosphino)-ethyl]-2(*S*)-(diphenylphosphino)ferrocen, 1-[1(*S*)-(Dicyclohexylphosphino)ethyl]-2(*R*)-(diphenylphosphino)ferrocen, 1-[(*R*)-(Diphenylphosphino)ethyl]-2(*S*)-(diphenylphosphino)ferrocen, 1-[1(*S*)-(Diphenylphosphino)ethyl]-2(*R*)-(diphenylphosphino) ferrocen, 1-[1(*R*)-(Diphenylphosphino)ethyl]-2(*S*)-(di-*tert*-butylphosphino)ferrocen, 1-[1(*S*)-(Diphenylphosphino) ethyl]-2(*R*)-(di-*tert*-butylphosphino)ferrocen, 1-{1(*R*)-[Bis(3,5-dimethylphenyl)phosphino]ethyl}-2(*S*)-(diphenylphosphino)ferrocen, 1-{1(*S*)-[Bis(3,5-dimethylphenyl)phosphino]ethyl}-2(*R*)-(diphenylphosphino)ferrocen, 1-{1(*R*) -[Bis(4-*tert*-butylphenyl)phosphino]ethyl}-2(*S*)-(diphenylphosphino)ferrocen, 1-{1(*S*)-[Bis(4-*tert*-butylphenyl) phosphino]ethyl}2(*R*)-(diphenylphosphino)ferrocen, 1-[1(*S*)-(9-Phosphabicyclo[3.3.1]nonan-9-yl)ethyl]-2(*R*) -(diphenylphosphino)ferrocen und 1-[1(*R*)-(9-Phosphabicyclo[3.3.1]nonan-9-yl)ethyl]-2(*S*)-(diphenylphosphino) ferrocen.

**15.** Verfahren nach einem der Ansprüche 9 bis 14, **dadurch gekennzeichnet, dass** X Chlor ist.

**16.** Verfahren nach Anspruch 9 und gegebenenfalls einem der Ansprüche 11 bis 15, **dadurch gekennzeichnet, dass** $R^1$ und $R^{1'}$ zusammen eine Cyclopentan-1,3-diylgruppe bilden.

**17.** Verfahren nach Anspruch 9 und gegebenenfalls einem der Ansprüche 11 bis 16, **dadurch gekennzeichnet, dass** $R^2$ eine gegebenenfalls substituierte Phenylgruppe ist.

## Claims

**1.** Iridium(I)-phosphine complexes having the general formula

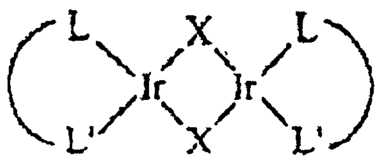

I,

in which X stands for fluorine, chlorine, bromine or iodine and

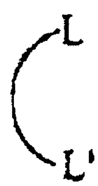

respectively means a chiral bidentate diphosphine ligand, including cis-/trans-isomers and isomer mixtures thereof.

**2.** Iridium(I)-phosphine complexes as claimed in claim 1, in solid form.

**3.** Iridium(I)-phosphine complexes as claimed in claim 1 or 2, **characterised in that** the chiral bidentate diphosphine ligand is a 1,2-di-substituted ferrocene with the phosphine groups constituting and/or disposed on the two substituents.

**4.** Iridium(I)-phosphine complexes as claimed in claim 1 or 2, **characterised in that** the chiral bidentate diphosphine ligand is selected from the group consisting of (*R*)-2,2'-bis(diphenylphosphino)-1,1'-binaphthalene, (*S*)-2,2'-bis (diphenylphosphino)-1,1'-binaphthalene, (*R*)-2,2'-bis(diphenylphosphino)-6,6'-dimethyl-1,1'-biphenyl, (*S*)-2,2'-bis (diphenylphosphino)-6,6'-dimethyl-1,1'-biphenyl, 1-[1(*R*)-(dicyclohexylphosphino)ethyl]-2(*S*)-(diphenylphosphino) ferrocene, 1-[1(*S*)-(dicyclohexylphosphino)ethyl]-2(*R*)-(diphenylphosphino)ferrocene, 1-[1(*R*)-(diphenylphosphino)ethyl]-2(*S*)-(diphenylphosphino)ferrocene, 1-[1(*S*)-(diphenylphosphino) ethyl] -2 (*R*)-(diphenylphosphino)ferrocene, 1-[1(*R*)-(diphenylphosphino)ethyl]-2(*S*)-(di-*tert*-butylphosphino)ferrocene, 1-[1(*S*)-(diphenylphosphino)ethyl]-2(*R*)-(di-*tert*-butylphosphino)-ferrocene, 1-{1(*R*)-[bis(3,5-dimethylphenyl)phosphino]ethyl}-2(*S*)-(diphenylphosphino)ferrocene, 1-{1(*S*)-[bis(3,5-dimethylphenyl)phosphino]ethyl}-2(*R*)-(diphenylphosphino)ferrocene, 1-{1(*R*)-[bis(4-*tert*-butylphenyl)phosphino]ethyl}-2(*S*)-(diphenylphosphino)ferrocene, 1-{1(*S*)-[bis(4-*tert*-butylphenyl)phosphino]ethyl}-2(*R*)-(diphenylphosphino)ferrocene, 1-[1(*S*)-(9-phosphabicyclo[3.3.1]nonan-9-yl)ethyl}-2(R)-(diphenylphosphino)ferrocene and 1-[1(*R*)-(9-phosphabicyclo[3.3.1]nonan-9-yl)ethyl]-2(S)-(diphenylphosphino)ferrocene.

**5.** Iridium(I)-phosphine complexes as claimed in one of claims 1 to 4, **characterised in that** X is chlorine.

**6.** Method of producing Iridium(I)-phosphine complexes as claimed in one of claims 1 to 5, **characterised in that** an iridium(I) complex of the formula $[IrX(coe)_2]_2$ or $[IrX(C_2H_4)_4]$, in which X has the meaning defined in claim 1 and coe means cyclooctene, is converted into a non-polar solvent with the corresponding chiral bidentate diphosphine.

**7.** Use of Iridium(I)-phosphine complexes as claimed in one of claims 1 to 5 as a catalyst for the asymmetric hydro-amination of prochiral olefins.

**8.** Use as claimed in claim 7, **characterised in that** the hydro-amination is conducted in the presence of fluoride ions.

**9.** Method of producing optically active amines having the general formula

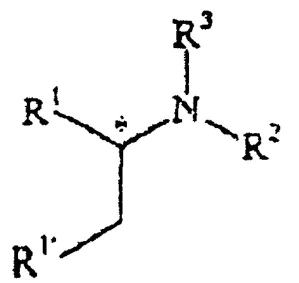

II,

in which either $R^1$ and $R^{1'}$ each independently of one another stand for an optionally substituted $C_{1-6}$-alkyl group, an optionally substituted aryl group, an optionally substituted arylalkyl group, an optionally substituted heteroaryl group or an optionally substituted (heteroaryl)alkyl group, provided that $R^1$ is not $R^{1'}$-$CH_2$- or $R^1$ and $R^{1'}$ form a prochiral mono- or bicyclical cycloaliphatic system in conjunction with the carbon atoms lying in between,
$R^2$ is an optionally substituted aryl group or acyl group
and $R^3$ is hydrogen or an optionally substituted acyl group, alkane sulphonyl group or arene sulphonyl group, **characterised in that** an olefin having the general formula

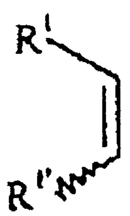

III.

in which $R^1$ and $R^{1'}$ have the meanings specified above, are converted in the presence of a chiral binuclear iridium (I)-phosphine complex having the general formula

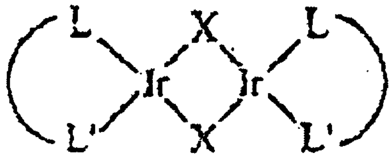 I,

in which X is fluorine, chlorine, bromine or iodine and

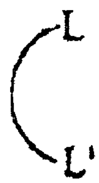

respectively means a chiral bidentate diphosphine ligand, with an amine or amide having the general formula $R^2$-NH-$R^3$(IV), in which $R^2$ and $R^3$ have the meanings specified above.

**10.** Method of producing optically active indolines having the general formula

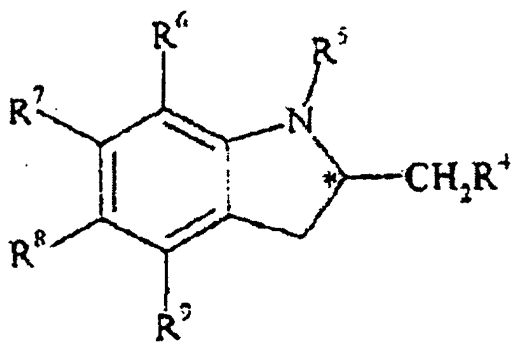 V,

in which $R^4$ stands for hydrogen or an optionally substituted $C_{1-4}$-alkyl group, $R^5$ has one of the meanings specified above for $R^2$ and $R^3$ and $R^6$ to $R^9$ independently of one another are hydrogen, optionally substituted $C_{1-6}$-alkyl or optionally substituted $C_{1-6}$-alkoxy, **characterised in that** an o-alkenyl aniline having the general formula

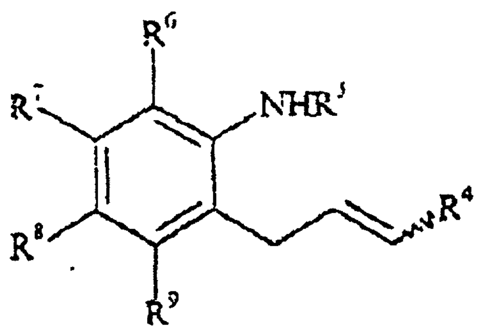 VI,

in which $R^4$ to $R^9$ have the meanings specified above, is cyclized in the presence of a chiral binuclear iridium(I)-phosphine complex having the general formula

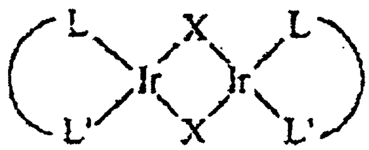

I,

in which X is fluorine, chlorine, bromine or iodine and

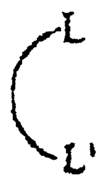

respectively means a chiral bidentate diphosphine ligand.

**11.** Method as claimed in claim 9 or 10, **characterised in that** the reaction takes place in the presence of fluoride ions.

**12.** Method as claimed in claim 11, **characterised in that** the fluoride ions are used in the form of the fluoride of an organic base.

**13.** Method as claimed in claim 12, **characterised in that** 1,1,1,3,3,3-hexakis (dimethylamino) diphosphazenium fluoride is used as the fluoride with an organic base.

**14.** Method as claimed in one of claims 9 to 13,
**characterised in that** the chiral bidentate diphosphine ligand is selected from the group consisting of (*R*)-2,2'-bis (diphenylphosphino)-1,1'-binaphthalene, (*S*)-2,2'-bis(diphenylphosphino)-1,1'-binaphthalene, (*R*)-2,2'-bis(diphenylphosphino)-6,6'-dimethyl-1,1'-biphenyl,(*S*)-2,2'-bis(diphenylphosphino)-6,6'-dimethyl-1,1'-biphenyl,1-[1(*R*)-(dicyclohexylphosphino)ethyl]-2(*S*)-(diphenylphosphino)ferrocene, 1-[1(*S*)-(dicyclohexylphosphino)ethyl]-2(*R*) -(diphenylphosphino)ferrocene, 1-[1(*R*)-(diphenylphosphino)ethyl]-2(*S*)-(diphenylphosphino)ferrocene, 1-[1(S) -(diphenylphosphino )ethyl ] -2 (*R* )-(diphenylphosphino)ferrocene, 1-[1(*R*)-(diphenylphosphino)ethyl]-2(*S*)-(di-tert-butylphosphino)ferrocene, 1-[1(S)-(diphenylphosphino)ethyl]-2(*R*)-(di-*tert*-butylphosphino)ferrocene, 1-{1(*R*) -[bis(3,5-dimethylphenyl)phosphino]ethyl}-2(S)-(diphenylphosphino)ferrocene, 1-{1(S)-[bis(3,5-dimethylphenyl) phosphino]ethyl}-2(*R*)-(diphenylphosphino)ferrocene, 1-{1(*R*)-[bis(4-*tert*-butylphenyl)phosphino]ethyl}-2(*S*) -(diphenylphosphino)ferrocene, 1-{1(*S*)-[bis(4-*tert*-butylphenyl)phosphino]ethyl}-2(*R*)-(diphenylphosphino)ferrocene, 1-[1(*S*)-(9-phosphabicyclo[3.3.1]nonan-9-yl)ethyl]-2(*R*)-(diphenylphosphino)ferrocene and 1-[1(*R*) -(9-phosphabicyclo[3.3.1]nonan-9-yl)ethyl]-2(*S*)-(diphenylphosphino)ferrocene.

**15.** Method as claimed in one of claims 9 to 14, **characterised in that** X is chlorine.

**16.** Method as claimed in claim 9 and optionally one of claims 11 to 15, **characterised in that** $R^1$ and $R^{1'}$ together form a cyclopentan-1,3-diyl group.

**17.** Method as claimed in claim 9 and optionally one of claims 11 to 16, **characterised in that** $R^2$ is an optionally substituted phenyl group.

**Revendications**

**1.** Complexes iridium (I)-phosphine de la formule générale :

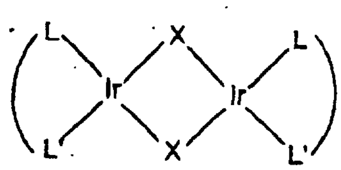

I

où X est le fluor, le chlore, le brome ou l'iode, et

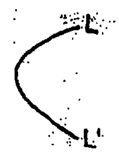

représente chaque fois un ligand diphosphine bivalent chiral,
y inclus leurs isomères cis-trans et les mélanges d'isomères.

**2.** Complexes iridium (I)-phosphine selon la revendication 1, sous forme solide.

**3.** Complexes iridium (I)-phosphine selon la revendication 1 où 2, **caractérisés en ce que** le ligand diphosphine bivalent chiral est un ferrocène 1,2-disubstitué avec les radicaux phosphino comme et/ou sur les deux substituants.

**4.** Complexes iridium (I)-phosphine selon la revendication 1 ou 2, **caractérisés en ce que** le ligand diphosphine bivalent chiral est choisi parmi le groupe consistant en le (R)-2,2'-bis(diphénylphosphino)-1,1'-binaphtalène, le (S)-2,2'-bis(diphénylphosphino)-1,1'-binaphtalène, le (R)-2,2'-bis(diphénylphosphino)-6,6'-diméthyl-1,1'-biphényle, le (S)-2,2'-bis(diphénylphosphino)-6,6'-diméthyl-1,1'-biphényle, le 1-[1(R)-(dicyclohexylphosphino)éthyl]-2(S)-(diphénylphosphino)ferrocène, le 1-[1(S)-(dicyclohexylphosphino)éthyl]-2(R)-(diphénylphosphino)-ferrocène, le 1-[1(R)-(diphénylphosphino)éthyl]-2(S)-(diphénylphosphino)ferrocène, le 1-[1(S)-(diphénylphosphino)éthyl]-2(R)-(diphénylphosphino)ferrocène, le 1-[1(R)-(diphénylphosphino)éthyl]-2(S)-(di-t-butylphosphino)ferrocène, le 1-[1(S)-(diphénylphosphino)éthyl]-2(R)-(di-t-butylphosphino)ferrocène, le 1-[1(R)-[bis(3,5-dimélthylphényl)phosphino]éthyl]-2(S)-(diphényl-phosphino)ferrocène, le 1-[1(S)-[bis(3, 5-diméthylphényl)-phosphino]éthyl]-2(R) - (diphénylphosphino) ferrocéne, le 1-[1(R)-[bis(4-t-butylphényl)phosphino]éthyl]-2(S)-(diphénylphosphino)ferrocène, le 1-[1(S)-[bis(4-t-butylphényl)phosphino]éthyl]-2(R) - (diphénylphosphino)ferrocène, le 1-[1(S)-(9-phosphabicyclo[3.3.1]nonan-9-yl)éthyl]-2(R)-(diphénylphosphino)ferrocène et le 1-[1(R) - (9-phosphabicyclo[3.3.1]nonan-9-yl)éthyl]-2(S)-(diphénylphosphino)-ferrocène.

**5.** Complexes iridium (I)-phosphine selon l'une quelconque des revendications 1 à 4, **caractérisés en ce que** X est chlore.

**6.** Procédé de préparation de complexes iridium (I)-phosphine selon l'une quelconque des revendications 1 à 5, **caractérisé en ce que** l'on fait réagir un complexe d'iridium (I) de la formule $[IrX(coe)_2]_2$ ou $[IrX(C_2H_4)_4]$, où X a la signification indiquée à la revendication 1 et coe est cyclooctène, dans un solvant non polaire avec la diphosphine bivalente chirale appropriée.

**7.** Utilisation des complexes iridium (I)-phosphine selon l'une quelconque des revendications 1 à 5, comme catalyseur de l'hydroamination asymétrique d'oléfines prochirales.

**8.** Utilisation selon la revendication 7, **caractérisée en ce que** l'hydroamination est réalisée en présence d'ions fluorure.

**9.** Procédé de préparation d'amines optiquement actives de la formule générale :

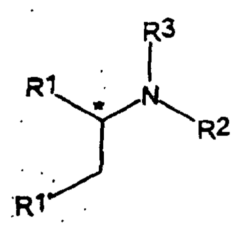

II

où $R^1$ et $R^{1'}$ représentent indépendamment l'un de l'autre, un radical alkyle en $C_{1-6}$ le cas échéant substitué, un radical aryle le cas échéant substitué, un radical aralkyle le cas échéant substitué, un radical hétéroaryle le cas échéant substitué ou un radical hétéroarylalkyle le cas échéant substitué, avec la condition que $R^1$ n'est pas $-CH_2-R^{1'}$, ou $R^1$ et $R^{1'}$ avec les atomes de carbone intermédiaires, forment un système cycloaliphatique mono- ou bicyclique prochiral ; $R^2$ représente un radical aryle ou un radical acyle le cas échéant substitué, et $R^3$ représente l'atome d'hydrogène ou un radical acyle, un radical alcanesulfonyle ou un radical arènesulfonyle le cas échéant substitué,
**caractérisé en ce qu'**une oléfine de la formule générale :

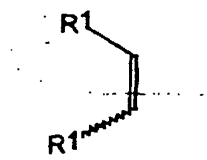

III

dans laquelle $R^1$ et $R^{1'}$ ont les significations indiquées ci-dessus, est mise à réagir, en présence d'un complexe iridium (I)-phosphine bivalent chiral de la formule générale :

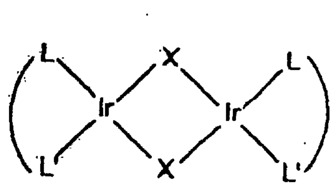

où X est le fluor, le chlore, le brome ou l'iode, et

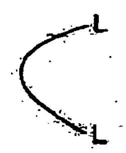

représente chaque fois un ligand diphosphine bivalent chiral, avec une amine ou un amide de la formule générale $R^2$-NH-$R^3$ (IV), où $R^2$ et $R^3$ ont la signification indiquées ci-dessus.

**10.** Procédé de préparation d'indolines optiquement actives de la formule générale :

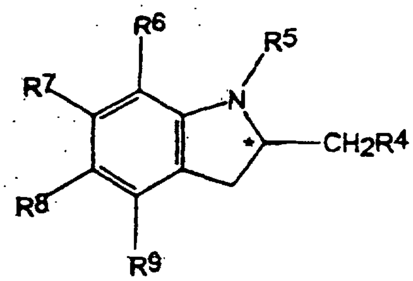

V

où $R^4$ représente l'atome d'hydrogène, un radical alkyle en $C_{1-4}$ le cas échéant substitué, $R^5$ a l'une des significations indiquées ci-dessus pour $R^2$ et $R^3$, $R^6$ à $R^9$ représentent indépendamment l'un de l'autre, l'atome d'hydrogène, un radical alkyle en $C_{1-6}$ le cas échéant substitué ou un radical alcoxy en $C_{1-6}$ le cas échéant substitué, **caractérisé en ce que** l'on cyclise une o-alcénylaniline de la formule générale

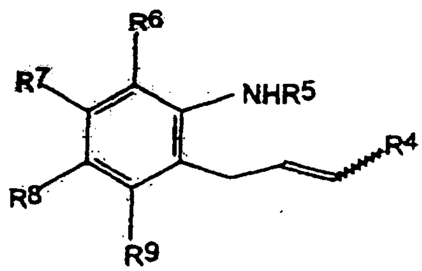

VI

dans laquelle $R^4$ à $R^9$ ont les significations indiquées ci-dessus, en présence d'un complexe iridium (I)-phosphine bivalent chiral de la formule générale ;

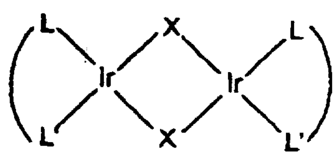

où X est le fluor, le chlore, le brome ou l'iode, et

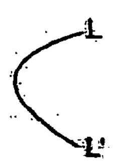

représente chaque fois un ligand diphosphine bivalent chiral.

**11.** Procédé selon la revendication 9 ou 10, **caractérisé en ce que** la réaction est réalisée en présence d'ions fluorure.

**12.** Procédé selon la revendication 11, **caractérisé en ce que** les ions fluorure sont mis en oeuvre sous la forme du fluorure d'une base organique.

**13.** Procédé selon la revendication 12, **caractérisé en ce que** comme fluorure de base organique, on met en oeuvre le fluorure de 1,1,1,3,3,3-hexakis(diméthylamino)-diphosphazénium.

**14.** Procédé selon l'une quelconque des revendications 9 à 13, **caracterisé en ce que** le ligand diphosphine bivalent

chiral est choisi parmi le groupe consistant en le (R)-2,2'-bis(diphénylphosphino)-1,1'-binaphtalène, le (S)-2,2'-bis (diphénylphosphino)-1,1'-binaphtalène, le (R)-2,2'-bis(diphénylphosphino)-6,6'-diméthyl-1,1'-biphényle, le (S)-2,2-bis(diphénylphosphino)-6,6'-diméthyl-1,1'-biphényle, le 1-[1(R)-(dicyclohexylphosphino)éthyl]-2(S)-(diphénylphosphino)ferrocène, le 1-[1(S)-(dicyclohexylphosphino)éthyl]-2(R) - (diphénylphosphino)-ferrocène, le 1-[1(R)-(diphénylphosphino)éthyl]-2(S)-(diphénylphosphino)ferrocène, le 1-[1(S)-(diphénylphosphino)éthyl]-2(R)-(diphénylphosphino) ferrocène, le 1-[1(R)-(diphénylphosphino)éthyl]-2(*S*)-(di-t-butyl- phpsphino)ferrocène, le 1-[1(S)-(diphénylphosphino)-éthyl]-2(R)-(di-t-butylphosphino)ferrocène, le 1-[1(R)-[bis(3,5-diméthylphényl)phosphino] éthyl]-2(S)-(diphénylphosphino)ferrocène, le 1-[1(S)-[bis(3,5-diméthylphényl)-phosphino]éthyl]-2(R)-(diphénylphosphino)ferrocène, le 1-[1(R)-[bis(4-t-butylphényl)phosphino]éthyl]-2(S)-(diphénylphosphino)ferrocène, le 1-[1 (S)-[bis(4-t-butylphényl)phosphino]éthyl]-2(R) - (diphénylphosphino)ferrocène, le 1-[1(S)-(9-phosphabicyclo [3.3.1]nonan-9-yl)éthyl]-2(R)-(diphénylphosphino)ferrocène et le 1-[1(R)-(9-phosphabicyclo[3.3.1]nonan-9-yl) éthyl]-2(S) - (diphénylphosphino)-ferrocène.

**15.** Procédé selon l'une quelconque des revendications 9 à 14, **caractérisé en ce que** X est chlore.

**16.** Procédé selon la revendication 9 et le cas échéant. l'une quelconque des revendications 11 à 15, **caractérise en ce que** $R^1$ et $R^{1'}$ forment ensemble un radical cyclopentan-1,3-diyle.

**17.** Procédé selon la revendication 9 et le cas échéant, l'une quelconque des revendications 11 à 16, caractérisé 25 en ce que $R^2$ est un radical phényie le cas échéant substitué.